# EUROPEAN PATENT APPLICATION

(11) **EP 3 734 058 A1**
(43) Date of publication of application: **04.11.2020**
(21) Application number: 18896999.2
(22) Date of filing: 21.12.2018
(51) Int. Cl.: F02M 55/02

(54) **FUEL DELIVERY PIPE**

(30) Priority: 27.12.2017 JP 2017251590
(71) Applicant: Usui Co., Ltd., Sunto-gun, Shizuoka 411-8610 (JP)
(72) Inventor: TSUTSUMI, Shingo, Sunto-gun, Shizuoka 411-8610 (JP); KANDA, Takanori, Sunto-gun, Shizuoka 411-8610 (JP)
(74) Representative: Hoppe, Lars
(86) International application number: PCT/JP2018/047331
(87) International publication number: WO 2019/131539

(57) **Abstract**

Provided is a high-quality fuel delivery pipe that is formed by stacking, braze-joining and integrating upper and lower cases, and is provided with excellent pressure resistance by reinforcing a portion having a low braze joint strength. This fuel delivery pipe formed by stacking, braze-joining and integrating the upper and lower cases is characterized in that a reinforcement member is provided on a side wall portion of the lower case that overlaps a side wall of the upper case separately from or integrally with the lower case, both the reinforcement member and the lower case are fitted into the upper case so that the reinforcement member and the lower case overlap the upper case, and the overlapping portions are joined and integrated together by copper brazing.

## Description

### Technical Field

The present invention relates to a fuel delivery pipe for a fuel injection type internal combustion engine, and more specifically to a fuel delivery pipe formed by stacking upper and lower molds (cases) in an overlapping manner and integrating them by copper brazing the overlapping portions.

### Background Art

As fuel delivery pipes for fuel injection type internal combustion engines, for example, fuel delivery pipes for use in fuel injection type gasoline internal combustion engines, fuel delivery pipes having various structures and shapes are used according to installation locations, connection structures, etc. Among them, a box-shaped fuel delivery pipe having a structure in which two of an upper and a lower mold (cases) are joined together has been known. An example of a conventional fuel delivery pipe of this type is a fuel delivery pipe formed by fitting together, in an overlapping manner, an upper case (upper mold) with an inverted-U-shaped cross section perpendicular to a longitudinal direction and formed by a ceiling wall and both side walls, and a lower case (lower mold) with a U-shaped cross section perpendicular to the longitudinal direction and formed by a bottom wall and both side walls, and joining and integrating the overlapping portions by copper brazing (see Patent Literatures 1 and 2).

However, there is a concern that a notable difference in the pressure resistance of the fuel delivery pipe occurs, depending on the shape, size, etc. of a fillet formed at the brazed joint portion of the upper case and the lower case, in the case of such a fuel delivery pipe formed by arranging openings of the upper case having the substantially U-shaped cross section and the lower case to face each other, fitting the lower case into the opening of the upper case, and joining and integrating the fitted portions by copper brazing.

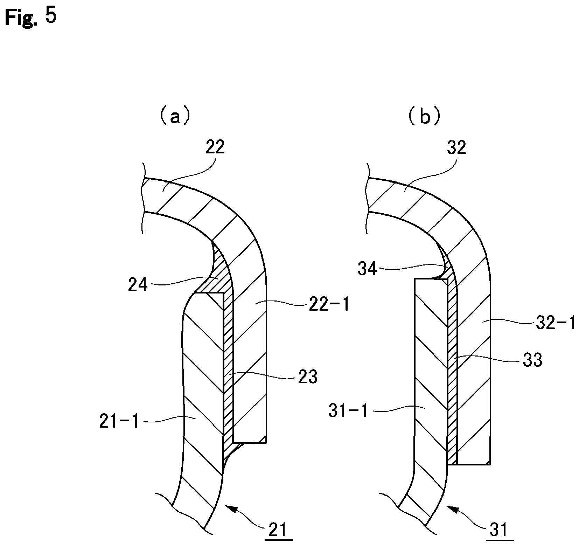

More specifically, Figures 5(a) and 5(b) show examples of two types of cross-sectional structures, respectively, which are different in the size and shape of the fillet at the brazed joint portion of the conventional upper case and lower case. Reference numerals 21 and 31 represent lower cases, reference numerals 22 and 32 are upper cases, reference numerals 23 and 33 are copper brazed portions, and reference numerals 24 and 34 are fillets. That is, in the conventional fuel delivery pipes formed by fitting the lower cases 21 and 31 into the openings of the upper cases 22 and 32 and joining and integrating the fitted portions by copper brazing, sufficient pressure resistance strength is not obtained at the fillet portions due to the influences of the shapes, sizes, etc. of the fillets 24 and 34 formed between upper end portions of side walls 21-1 and 31-1 of the lower cases 21 and 31 and inner surfaces of rounded portions of side walls 22-1and 32-1 of the upper cases 22 and 32. In some products, when a high internal pressure is applied to the pipes, cracks occur at the portions of the fillets 24 and 34 where pressure resistance is low, resulting in poor quality. As a countermeasure therefor, it is necessary that shapes and sizes of the fillets 24 and 34 are in appropriate conditions, but it is difficult to control the shapes and sizes of the fillets 24 and 34, and it is also difficult to check the shapes and sizes of the fillets 24 and 34 by product inspections because the portions of the fillets 24 and 34 are located inside the delivery pipe bodies. Therefore, conventionally, for a fuel delivery pipe formed by stacking, braze-joining and integrating the upper and lower cases, a major problem was to secure pressure resistance, particularly at the brazed joint portion.

### Citation List

### Patent Literatures

Patent Literature 1: Japanese Patent Laid-Open No. H11-22575
Patent Literature 2: Japanese Patent Laid-Open No. 2001-207934

### Summary of Invention

### Technical Problem

The present invention has been made to solve the above-mentioned problem of the pressure resistance of the conventional technique, and an object of the present invention is to provide a high-quality fuel delivery pipe that is formed by stacking, braze-joining and integrating upper and lower cases, and is provided with excellent pressure resistance by reinforcing a portion having low braze joint strength, or a portion expected to have a stress concentration, with simple means to improve the pressure resistance at the brazed joint portion.

### Solution to Problem

A fuel delivery pipe according to the present invention is a fuel delivery pipe comprising an upper case and a lower case, and formed by fitting together, in an overlapping manner, the upper case with an inverted-U-shaped cross section perpendicular to a longitudinal direction and formed by a ceiling wall and both side walls, and the lower case with a U-shaped cross section perpendicular to a longitudinal direction and formed by a bottom wall and both side walls, and joining and integrating the overlapping portions together by copper brazing, wherein a reinforcement member is provided in a protruding manner on a side wall portion of the lower case overlapping a side wall of the upper case, separately from or integrally with the lower case, both the reinforcement member and the lower case are fitted into the upper case so that the reinforcement member and the lower case overlap the upper case, and the overlapping portions are joined and integrated together by copper brazing to reinforce the copper brazed joint portion.

In a preferred embodiment, the reinforcement member is provided at a plurality of locations on the side wall portion of the lower case.

Further, it is also possible to provide the reinforcement member over the entire periphery of the side wall of the lower case.

### Advantageous Effects of Invention

According to the fuel delivery pipe of the present invention, in the fuel delivery pipe formed by stacking, braze-joining and integrating the upper and lower cases, a portion having low braze joint strength can be reinforced with a reinforcement member by providing the reinforcement member on the side wall portion of the lower case overlapping the side wall of the upper case, separately from or integrally with the lower case. Thus, it is possible to readily provide the high-quality fuel delivery pipe having excellent pressure resistance at low cost.

### Brief Description of Drawings

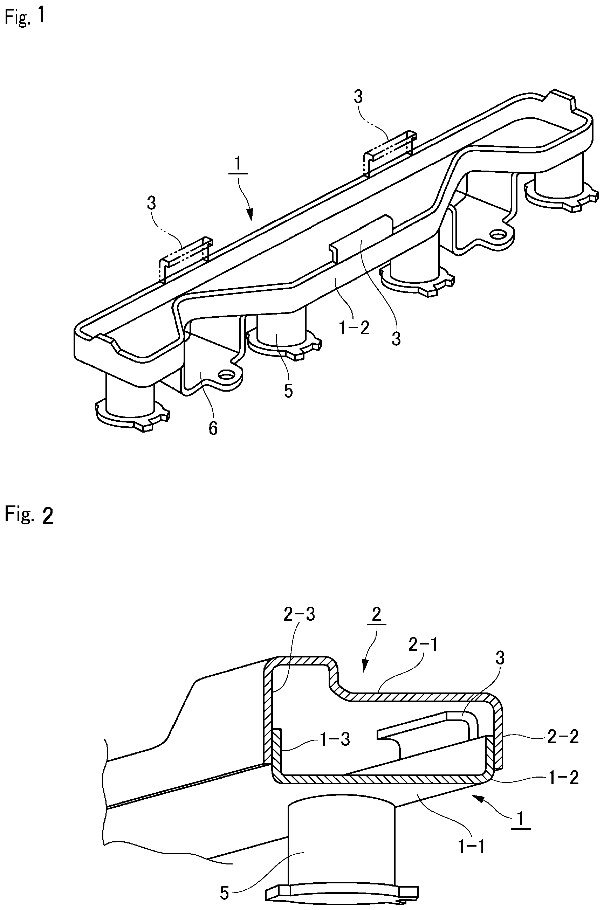

[Figure 1] Figure 1 is a schematic perspective view showing a structure of an embodiment of a lower case of a fuel delivery pipe according to the present invention.
[Figure 2] Figure 2 is a partially enlarged perspective cutaway view showing a cross-sectional structure of a body of the fuel delivery pipe using the lower case shown in Figure 1.

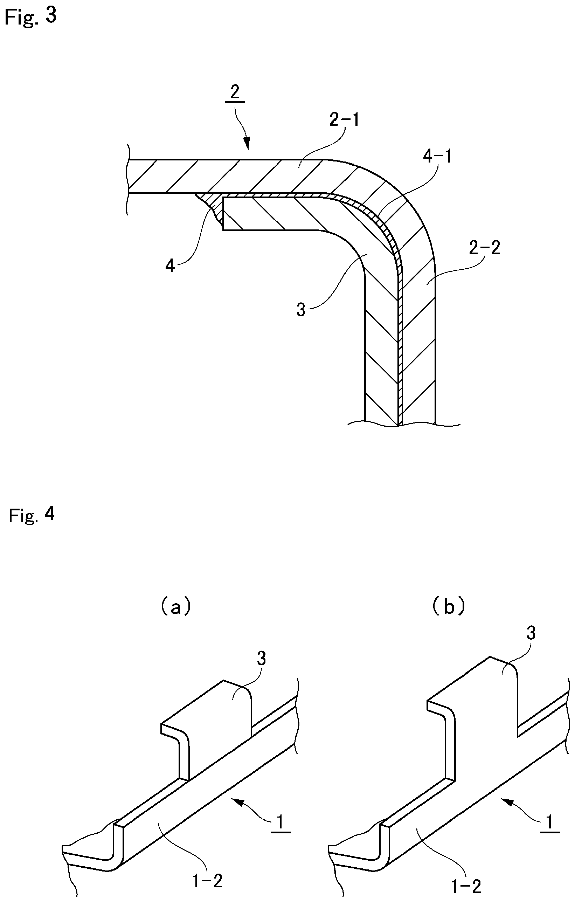

[Figure 3] Figure 3 illustrates an example of the cross-sectional structure of the brazed joint portion of an upper case and the lower case of the fuel delivery pipe according to the present invention, and is a partially enlarged cross-sectional view showing the brazed joint portion when the lower case having a side wall portion provided with a reinforcement member shown in Figures 1 and 2 is used.
[Figure 4] Figure 4 illustrates an example of the structure of the side wall portion provided with the reinforcement member of the lower case of the fuel delivery pipe according to the present invention, wherein Figure 4(a) is a perspective view showing the side wall portion provided with the reinforcement member as a separate member from the lower case, and Figure 4(b) is a perspective view showing the side wall portion provided with the reinforcement member integrated with the lower case.
[Figure 5] Figure 5 illustrates an example of the cross-sectional structure of the brazed joint portion of an upper case and a lower case of a conventional fuel delivery pipe, wherein Figures 5(a) and 5(b) are partially enlarged cross sectional views showing the brazed joint portions having fillets of different sizes and shapes, respectively.

### Description of Embodiment

In the fuel delivery pipe of an embodiment of the present invention shown in Figures 1 and 2, the delivery pipe body include a lower case 1 (lower mold) and an upper case 2 (upper mold). The lower case 1 has a U-shaped cross section perpendicular to a longitudinal direction, and is formed by a bottom wall 1-1 and both side walls 1-2 and 1-3. The upper case 2 has an inverted-U-shaped cross section perpendicular to a longitudinal direction, and is formed by a ceiling wall 2-1 and both side walls 2-2 and 2-3. Side wall portions of the lower case 1 and the upper case 2 are fitted together in an overlapping manner, and the overlapping portions are integrally united in a liquid-tight manner by copper brazing. In Figures 1 and 2, reference numeral 5 represents a cup formed on the lower case 1, and reference numeral 6 is an attachment bracket attached to the lower case 1.

For the lower case 1 in the fuel delivery pipe of this structure, as shown in Figures 1 and 2, a reinforcement member 3 as a separate member from the lower case is provided in a protruding manner, for example, on one side wall 1-2 of both side walls 1-2 and 1-3 that overlap the side walls of the upper case 2, respectively. As shown in the drawings, the reinforcement member 3 is formed in a substantially L-shape along an inner wall of the upper case 2, using, for example, a member of the same material and substantially the same thickness as the side wall 1-2, and is provided in a protruding manner by fixing a lower end surface of the reinforcement member 3 to an upper surface of the side wall 1-2. A location to mount the reinforcement member 3 is a portion where breakage or cracks are expected by an internal pressure fatigue test, that is, a portion where braze joint strength is low, or a portion where a stress concentration during application of internal pressure is shown by computer simulations.

When assembling the fuel delivery pipe using the lower case 1 provided with the reinforcement member 3 as described above, openings of the lower case 1 and the upper case 2 are arranged to face each other, and the lower case 1 with the reinforcement member 3 is fitted into the opening of the upper case 2. At this time, the reinforcement member 3 fixed to the upper surface of the lower case 1 is fitted along the inner wall (the round portion) of the upper case 2. When the lower case 1 and the upper case 2 are fitted together in such a manner that the side wall portions of the lower case 1 and the upper case 2 overlap each other, the overlapping portions including the reinforcement member 3 are joined together by copper brazing.

In the brazed joint portion of the lower case 1 and the upper case 2 of the fuel delivery pipe assembled in this manner, the brazed joint portion between the side wall 1-2 of the lower case 1 and the side wall 2-2 of the upper case 2, which is considered as a portion having low pressure resistance, can secure necessary pressure resistance with the reinforcement member 3 as illustrated in Figure 3 showing a part of the cross sectional structure of the brazed joint portion between the reinforcement member 3 fixed to the lower case 1 and the upper case 2. A fillet 4 of the reinforcement member 3 is placed in the portion of the ceiling wall 2-1 of the upper case 2, and thus is hardly influenced thereby. Reference numeral 4-1 represents the brazed joint portion.

As a method of forming the reinforcement member 3, Figure 4(a) shows an embodiment of the above-mentioned fuel delivery pipe according to the present invention employing a method in which the reinforcement member 3 as a separate member from the lower case 1 is provided on the side wall 1-2 of the lower case 1. However, as a method of forming the reinforcement member 3, it is also possible to employ an embodiment in which the reinforcement member 3 is provided integrally with the lower case 1 as shown in Figure 4(b). Moreover, since the reinforcement member 3 is to be provided at a location where cracks and breakage are caused or highly possibly caused by an internal pressure fatigue test of the fuel delivery pipe, the location is not necessarily one, and the reinforcement member 3 can be provided at a plurality of locations on the side wall portion of the lower case 1 as shown in Figure 1 if necessary. Further, the reinforcement member 3 can also be provided over the entire periphery of the side wall 1-2 of the lower case 1 to reinforce the entire brazed joint portion.

In the above-mentioned fuel delivery pipe of the embodiment of the present invention, the substantially L-shaped reinforcement member 3 is provided on the side wall 1-2 of the lower case 1 overlapping the side wall of the upper case 2, at the weakest portion detected by an internal pressure test performed in advance. Thus, the weakest portion is reinforced with the reinforcement member 3, and cracks will not occur at this portion.

### Reference Signs List

- 1: lower case
- 1-1: bottom wall
- 1-2, 1-3: side wall
- 2: upper case
- 2-1: ceiling wall
- 2-2, 2-3: side wall
- 3: reinforcement member
- 4: fillet
- 4-1: brazed joint portion
- 5: cup
- 6: attachment bracket

## Claims

1. A fuel delivery pipe comprising an upper case and a lower case and formed by fitting together, in an overlapping manner, the upper case with an inverted-U-shaped cross section perpendicular to a longitudinal direction and formed by a ceiling wall and both side walls, and the lower case with a U-shaped cross section perpendicular to a longitudinal direction and formed by a bottom wall and both side walls, and joining and integrating the overlapping portions together by copper brazing, wherein:
a reinforcement member is provided in a protruding manner on a side wall portion of the lower case overlapping a side wall of the upper case, separately from or integrally with the lower case;
both the reinforcement member and the lower case are fitted into the upper case so that the reinforcement member and the lower case overlap the upper case; and
the overlapping portions are joined and integrated together by copper brazing to reinforce the copper brazed joint portion.

2. The fuel delivery pipe according to claim 1, wherein
the reinforcement member is provided at a plurality of locations on the side wall portion of the lower case.
